(19) Europäisches Patentamt
European Patent Office
Office européen des brevets

(11) **EP 1 062 483 B1**

(12) **EUROPÄISCHE PATENTSCHRIFT**

(45) Veröffentlichungstag und Bekanntmachung des Hinweises auf die Patenterteilung:
**12.06.2002 Patentblatt 2002/24**

(21) Anmeldenummer: **99911785.6**

(22) Anmeldetag: **12.03.1999**

(51) Int Cl.⁷: **G01F 17/00**, G01N 35/10, G01F 13/00

(86) Internationale Anmeldenummer:
**PCT/EP99/01640**

(87) Internationale Veröffentlichungsnummer:
**WO 99/47898 (23.09.1999 Gazette 1999/38)**

(54) **VERFAHREN UND VORRICHTUNG ZUR BESTIMMUNG VON PIPETTIERTEN FLÜSSIGKEITSVOLUMINA**

METHOD AND APPARATUS FOR DETERMINING PIPETTED VOLUMES OF LIQUID

PROCEDE ET DISPOSITIF PERMETTANT DE DETERMINER DES VOLUMES LIQUIDES PIPETTEES

(84) Benannte Vertragsstaaten:
**DE FR GB**

(30) Priorität: **13.03.1998 DE 19810997**

(43) Veröffentlichungstag der Anmeldung:
**27.12.2000 Patentblatt 2000/52**

(73) Patentinhaber: **QIAGEN GmbH**
**40724 Hilden (DE)**

(72) Erfinder: **LUTZE, Konstantin**
**CH-8634 Hombrechtikon (CH)**

(74) Vertreter: **Leidescher, Thomas et al**
**Zimmermann & Partner,**
**Postfach 330 920**
**80069 München (DE)**

(56) Entgegenhaltungen:
**EP-A- 0 250 671    US-A- 4 586 546**

• **PATENT ABSTRACTS OF JAPAN vol. 010, no. 038 (P-428), 14. Februar 1986 & JP 60 185134 A (OLYMPUS KOGAKU KOGYO KK), 20. September 1985**

**Beschreibung**

Die Erfindung bezieht sich auf ein Verfahren und eine Vorrichtung zur Bestimmung eines Flüssigkeitsvolumens, das aus einem Gefäß mittels einer Pipette entnommen, bzw. aus einer Pipette in ein Gefäß abgegeben wird.

Es sind verschiedene Vorrichtungen bekannt, die die Detektion von Flüssigkeitsvolumina durch die Bestimmung des Füllstandes eines geeichten Gefäßes ermöglichen. Dies ist z.B. durch das Aussenden von Ultraschall möglich, der von der Flüssigkeitsoberfläche reflektiert wird. Durch Bestimmung der Zeitdauer zwischen Aussenden und Empfang der reflektierten Wellen kann die Füllhöhe ermittelt werden. Daneben werden Leitfähigkeitsmessungen zur Füllstandsbestimmung benutzt, wobei eine Sonde ab dem Zeitpunkt des Eintauchens in eine Flüssigkeit eine Änderung der Leitfähigkeit erfährt. Voraussetzung für die Verwendbarkeit dieser Methode ist eine Mindestleitfähigkeit der Flüssigkeit, deren Füllstand bestimmt werden soll.

Im Rahmen der vorliegenden Erfindung wird zur Bestimmung des Flüssigkeitsvolumens die Messung einer Kapazität vorgenommen. Als erster Pol dient dabei eine Metallfläche, mit der das Gefäß, in dem sich das zu detektierende Flüssigkeitsvolumen befindet, in Kontakt steht. Den zweiten Pol stellt eine Detektionsspitze dar, die langsam von oben auf die Flüssigkeit zubewegt wird. Bekanntermaßen ist die Kapazität zwischen den beiden Polen durch den Abstand derselben sowie durch das sich dazwischen befindende Medium bestimmt. In dem Moment, in dem die Detektionsspitze in die Flüssigkeit eintaucht, findet eine sprunghafte Änderung der Dielektrizitätszahl des sich zwischen den Polen befindenden Mediums statt, da ab genau diesem

Zeitpunkt Luft zwischen den beiden Polen ausgeschlossen ist. Bei bekannten Pipettierautomaten wird dadurch das Vorhandensein von Flüssigkeiten in Gefäßen auf der Arbeitsfläche verifiziert, wobei ein zu tiefes Eintauchen der Pipettiernadel verhindert wird.

Die obigen Methoden zur Flüssigkeitsdetektion sind aus dem Stand der Technik bekannt. Die vorliegende Erfindung kann im allgemeinen mit verschiedenen dieser Methoden durchgeführt werden und wird daher durch diese nicht beschränkt.

Bei der Durchführung von automatischen Verfahren zum Pipettieren können eine Vielzahl von Ursachen zu Pipettierfehlern führen, wie zum Beispiel

- Verstopfen von Pipettierspitzen
- zu frühes Ansprechen der Flüssigkeitsdetektion durch fehlerhaften Abgleich
- Undichtigkeiten im Schlauchsystem
- Undichtigkeiten der Dilutoren.

Alle Ursachen führen dazu, daß ein geringeres Flüssigkeitsvolumen als das eigentlich gewünschte oder im Extremfall sogar keinerlei Flüssigkeit aus dem Gefäß in die Pipette aufgenommen bzw. aus der Pipette in ein Gefäß abgegeben wird. Insbesondere bei Flüssigkeiten mit sehr hohem Dampfdruck kann es bereits im Gasraum über der Flüssigkeit aufgrund der dort herrschenden hohen Konzentrationen zu einem Ansprechen der Flüssigkeitsdetektion kommen.

Die Nachteile der bekannten Verfahren liegen darin, daß während des automatischen Pipettiervorgangs nicht überprüft wird, ob während eines Pipettierschritts tatsächlich Flüssigkeit aufgenommen, bzw. abgegeben wurde, und ob das pipettierte Volumen maximal innerhalb einer vorbestimmten Toleranzgrenze von dem gewünschten Volumen abweicht. Pipettierfehler werden somit nicht festgestellt und der Benutzer kann nicht darauf aufmerksam gemacht werden.

Der vorliegenden Erfindung liegt somit die Aufgabe zugrunde, ein Verfahren und eine Vorrichtung zur Bestimmung von Pipettierfehlern bei automatischen Pipettiervorgängen bereitzustellen.

Diese Aufgabe löst die Erfindung durch die in den unabhängigen Patentansprüchen 1, 2 und 3 angegebenen Verfahren, sowie den in den unabhängigen Patentansprüchen 8, 9 und 10 angegebenen Vorrichtungen. Weitere vorteilhafte Details, Aspekte und Ausgestaltungen der Erfindung ergeben sich aus den abhängigen Patentansprüchen, der Beschreibung, den Figuren und den Beispielen.

Die oben genannte Aufgabe wird erfindungsgemäß z.B. gelöst durch ein Verfahren zur Bestimmung eines Flüssigkeitsvolumens, welches einem Gefäß mittels einer Pipette entnommen wird, wobei das Verfahren die folgenden Schritte a) bis f) umfaßt. Als erster Schritt (Schritt a)) wird das in einem Gefäß enthaltene Flüssigkeitsvolumen $V_{1a}$ mittels einer Detektionsvorrichtung bestimmt und der Wert in einer Rechnereinheit gespeichert. Dann (Schritt b)) wird ein ' Flüssigkeitsvolumen $V_{1ist}$ in eine Pipette aufgenommen und anschließend wird wiederum das in dem Gefäß enthaltene Flüssigkeitsvolumen $V_{1e}$ mittels einer Detektionsvorrichtung bestimmt und in einer Rechnereinheit gespeichert (Schritt c)). Danach wird durch die Rechnereinheit die Berechnung des tatsächlich aufgenommenen Flüssigkeitsvolumens $V_{1ist}$ gemäß der Gleichung $V_{1a} - V_{1e} = V_{1ist}$ vorgenommen (Schritt d)). Anschließend wird durch die Rechnereinheit die Differenz zwischen tatsächlich aufgenommenem Flüssigkeitsvolumen $V_{1ist}$ und einem zur Aufnahme vorbestimmten Flüssigkeitsvolumen $V_{1soll}$ gemäß der Gleichung $|V_{1ist} - V_{1soll}| = V_{1diff}$ vorgenommen (Schritt e)). Dann wird wiederum durch die Rechnereinheit ein Vergleich der Differenz $V_{1diff}$ mit einem vorbestimmten Flüssigkeitsvolumen $\varepsilon_1$ vorgenommen und eine Fehlermeldung für den Fall angezeigt, daß $V_{1diff} > \varepsilon_1$ ist (Schritt f)).

Daneben bezieht sich die Erfindung auf ein Verfahren zur Bestimmung eines Flüssigkeitsvolumens, welches aus einer Pipette in ein Gefäß abgegeben wird, wobei das Verfahren die folgenden Schritte a') bis f') umfaßt. Als erster Schritt (Schritt a')) wird das in einem Ge-

fäß enthaltene Flüssigkeitsvolumen $V_{2a}$ mittels einer Detektionsvorrichtung bestimmt und der Wert in einer Rechnereinheit gespeichert. Dann (Schritt b')) wird ein Flüssigkeitsvolumen $V_{2ist}$ aus einer Pipette in das Gefäß abgegeben und anschließend wiederum das in dem Gefäß enthaltene Flüssigkeitsvolumen $V_{2e}$ mittels einer Detektionsvorrichtung bestimmt und in einer Rechnereinheit gespeichert (Schritt c')). Danach wird durch die Rechnereinheit die Berechnung des tatsächlich abgegebenen Flüssigkeitsvolumens $V_{2ist}$ gemäß der Gleichung $V_{2e} - V_{2a} = V_{2ist}$ vorgenommen (Schritt d')). Anschließend wird durch die Rechnereinheit die Differenz zwischen tatsächlich abgegebenem Flüssigkeitsvolumen $V_{2ist}$ und einem zur Abgabe vorbestimmten Flüssigkeitsvolumen $V_{2soll}$ gemäß der Gleichung $|V_{2ist} - V_{2soll}| = V_{2diff}$ (Schritt e')). Dann wird wiederum durch die Rechnereinheit ein Vergleich der Differenz $V_{2diff}$ mit einem vorbestimmten Flüssigkeitsvolumen $\varepsilon_2$ vorgenommen und eine Fehlermeldung für den Fall angezeigt, daß $V_{2diff} > \varepsilon_2$ ist.

Außerdem bezieht sich die vorliegende Erfindung auf ein Verfahren zur Bestimmung eines Flüssigkeitsvolumens, welches aus einem ersten Gefäß in ein zweites Gefäß mittels einer Pipette übertragen wird. Bei diesem erfindungsgemäßen Verfahren werden zuerst die oben genannten Schritte a) bis f) zur Bestimmung des aus dem ersten Gefäß in die Pipette aufgenommenen Flüssigkeitsvolumens durchgeführt, dann die Pipette von dem ersten Gefäß zu dem zweiten Gefäß bewegt und anschließend die oben genannten Schritte a') bis f') zur Bestimmung des aus der Pipette in das zweite Gefäß abgegebenen Flüssigkeitsvolumens durchgeführt. Das aus dem ersten Gefäß aufgenommene Flüssigkeitsvolumen kann sich von dem in das zweite Gefäß abgegebene Flüssigkeitsvolumen unterscheiden.

Daneben bezieht sich die Erfindung auf eine Vorrichtung zur Bestimmung eines Flüssigkeitsvolumens, welches einem Gefäß mittels einer Pipette entnommen wird, wobei die Vorrichtung ein Speichermittel zur Speicherung von Zahlenwerten, Mittel zur Bestimmung eines in dem Gefäß enthaltenen Flüssigkeitsvolumnes $V_{1a}$, Mittel zur Aufnahme eines Flüssigkeitsvolumens $V_{1ist}$ in eine Pipette, Mittel zur Bestimmung des in dem Gefäß enthaltenen Flüssigkeitsvolumens $V_{1e}$, Mittel zur Berechnung des tatsächlich aufgenommenen Flüssigkeitsvolumens $V_{1ist}$ gemäß der Gleichung $V_{1a} - V_{1e} = V_{1ist}$, Mittel zur Berechnung der Differenz zwischen tatsächlich aufgenommenen Flüssigkeitsvolumen $V_{1ist}$ und einem zur Aufnahme vorbestimmten Flüssigkeitsvolumen $V_{1soll}$ gemäß der Gleichung $|V_{1ist} - V_{1soll}| = V_{1diff}$, Mittel zum Vergleich der Differenz $V_{1diff}$ mit einem vorbestimmten Flüssigkeitsvolumen $\varepsilon_1$ und Mittel zur Anzeige einer Fehlermeldung umfaßt.

Außerdem umfaßt die vorliegende Erfindung eine Vorrichtung zur Bestimmung eines Flüssigkeitsvolumens, welches aus einer Pipette in ein Gefäß abgegeben wird, wobei die Vorrichtung ein Speichermittel zur Speicherung von Zahlenwerten, Mittel zur Bestimmung eines in dem Gefäß enthaltenen Flüssigkeitsvolumnes $V_{2a}$, Mittel zur Abgabe eines Flüssigkeitsvolumens $V_{2ist}$ in das Gefäß, Mittel zur Bestimmung des in dem Gefäß enthaltenen Flüssigkeitsvolumens $V_{2e}$, Mittel zur Berechnung des tatsächlich abgegebenen Flüssigkeitsvolumens $V_{2ist}$ gemäß der Gleichung $V_{2e} - V_{2a} = V_{2ist}$, Mittel zur Berechnung der Differenz zwischen tatsächlich abgegebenem Flüssigkeitsvolumen $V_{2ist}$ und einem zur Abgabe vorbestimmten Flüssigkeitsvolumen $V_{2soll}$ gemäß der Gleichung $|V_{2ist} - V_{2soll}| = V_{2diff}$, Mittel zum Vergleich der Differenz $V_{2diff}$ mit einem vorbestimmten Flüssigkeitsvolumen $\varepsilon_2$ und Mittel zur Anzeige einer Fehlermeldung umfaßt.

Daneben bezieht sich die Erfindung auch auf eine Vorrichtung zur Bestimmung eines Flüssigkeitsvolumens, welches aus einem ersten Gefäß in ein zweites Gefäß mittels einer Pipette übertragen wird, wobei die Vorrichtung die oben genannten Mittel der Vorrichtung zur Bestimmung des aus dem ersten Gefäß in die Pipette aufgenommenen Flüssigkeitsvolumens umfaßt, daneben Mittel zur Bewegung der Pipette von dem ersten Gefäß zu dem zweiten Gefäß enthalten ist und zusätzlich die oben genannten Mittel der Vorrichtung zur Bestimmung des aus der Pipette in das zweite Gefäß abgegebenen Flüssigkeitsvolumens umfaßt sind.

Durch die vorliegende Erfindung ist es somit möglich, bisher nicht detektierbare Pipettierfehler aufzudecken und somit die Prozeßsicherheit erheblich zu steigern. Das erfindungsgemäße 'Verfahren kann insbesondere im Bereich der Molekularbiologie und der Molekulardiagnostik angewendet werden, einschließlich der Reinigung und Filterung von Nucleinsäuren, insbesondere Plasmid DNA, genomischer DNA und RNA, sowie enzymatischer Reaktionen und PCR (polymerase chain reaction). Die vorliegende Erfindung ist aber nicht auf die genannten Einsatzgebiete beschränkt.

Bevorzugte Ausführungsformen der Erfindung werden im folgenden detailliert beschrieben. Gemäß einem vorteilhaften Aspekt der vorliegenden Erfindung kann bei den erfindungsgemäßen Verfahren zur Bestimmung des aus einem Gefäß entnommenen Flüssigkeitsvolumens, zur Bestimmung des in ein Gefäß abgegeben Flüssigkeitsvolumens sowie zur Bestimmung des aus einem ersten Gefäß in ein zweites Gefäß übertragenen Volumens der Schritt a) bzw. a') durch die Verwendung eines vom Benutzer vorgegebenen Wertes des in dem jeweiligen Gefäß enthaltenen Flüssigkeitsvolumens $V_{1a}$ bzw. $V_{2a}$ ersetzt werden.

Ein weiterer vorteilhafter Aspekt der vorliegenden Erfindung ergibt sich aus der Tatsache, daß im Anschluß an den oben genannten Schritt a) zusätzlich die Schritte a1), a2), a3) und a4) durchgeführt werden. Dabei wird nach der in Schritt a) vorgenommenen Bestimmung und Speicherung des in einem Gefäß enthaltenen Flüssigkeitsvolumens $V_{1a}$ das in demselben Gefäß enthaltene Flüssigkeitsvolumen nochmals mittels einer Detektionsvorrichtung bestimmt, der Wert mit $V_{11a}$ be-

zeichnet und ebenfalls in einer Rechnereinheit gespeichert (Schritt a1)). Für den Fall, daß $V_{11a} = 0$ ist wird eine Fehlermeldung ausgegeben (Schritt a2)). Danach wird durch die Rechnereinheit die Differenz zwischen $V_{1a}$ und $V_{11a}$ gemäß der Gleichung $|V_{1a} - V_{11a}| = V_{11diff}$ berechnet (Schritt a3)). Anschließend wird durch die Rechnereinheit ein Vergleich der Differenz $V_{11diff}$ mit einem vorbestimmten Flüssigkeitsvolumen $\varepsilon_{11}$ vorgenommen und für den Fall daß $V_{11diff} > \varepsilon_{11}$ ist eine Fehlermeldung angezeigt (Schritt a4)).

Gemäß einem besonders vorteilhaften Aspekt der vorliegenden Erfindung genügt das aus dem ersten Gefäß in die Pipette aufgenommene Flüssigkeitsvolumen $V_{1soll}$ bzw. das aus der Pipette in das zweite Gefäß abgegebene Flüssigkeitsvolumen $V_{2soll}$ der Bedingung $1\,\mu l < (V_{1soll}; V_{2soll}) < 10000\,\mu l$ insbesondere der Bedingung $10\,\mu l < (V_{1soll}; V_{2soll}) < 1000\,\mu l$ und in besonders bevorzugter Weise der Bedingung $100\,\mu l < (V_{1soll}; V_{2soll}) < 400\,\mu l$.

Ein weiterer vorteilhafter Aspekt der vorliegenden Erfindung wird dadurch realisiert, daß eine als Detektionsvorrichtung verwendete Detektionsspitze vor zumindest einer Bestimmung des Flüssigkeitsvolumens in die Flüssigkeit eingetaucht wird und anschließend in eine Position oberhalb der Flüssigkeitsoberfläche zurückbewegt wird. Durch das Eintauchen der Detektionsspitze vor der Detektion der Flüssigkeitsoberfläche können fehlerhafte Bestimmungen vermieden werden, die auf Flüssigkeitstropfen zurückzuführen sind, die sich an der Detektionsspitze befinden. Diese können durch das Eintauchen abgestreift werden, wodurch anschließend eine fehlerfreie Detektion ermöglicht wird. Das Eintauchen kann bevorzugt mehrmals erfolgen. Das geschilderte Verfahren zum Abstreifen von Flüssigkeitstropfen von der Detektionsspitze kann auch bei Volumenbestimmungen durchgeführt werden, die sich nicht auf die Bestimmung von abgegebenen bzw. aufgenommenen Volumina beziehen.

Nach der Ausgabe einer Fehlermeldung während des erfindungsgemäßen Verfahrens wird eine Fehlerbehandlung durchgeführt, die allerdings anwendungsabhängig und damit unabhängig von der vorliegenden Erfindung ist. Die Fehlerbehandlung wird aus diesem Grund hier nicht näher erläutert.

Die erfindungsgemäßen Verfahren wird durch das nachfolgende Beispiel unter Bezug auf die Figuren näher erläutert, obwohl die vorliegende Erfindung nicht darauf beschränkt ist.

BEISPIEL

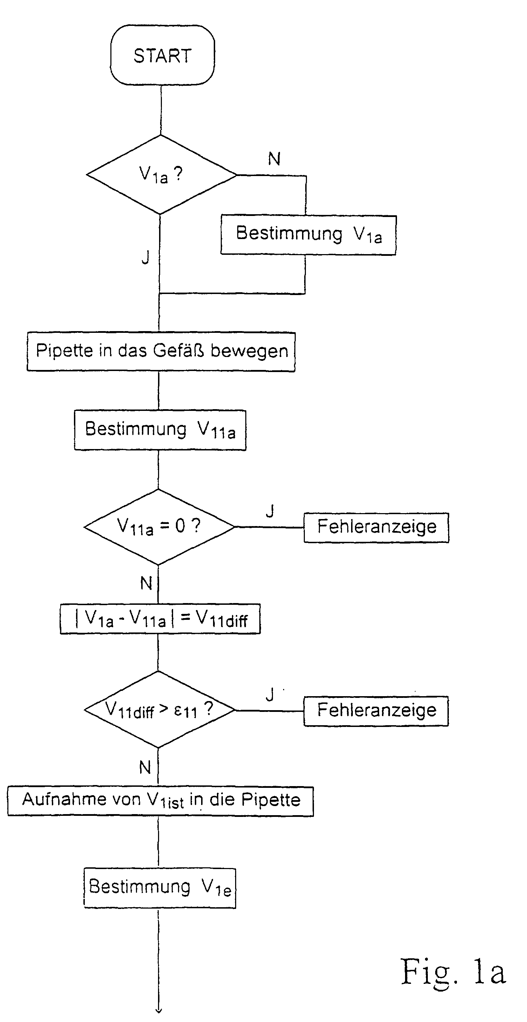

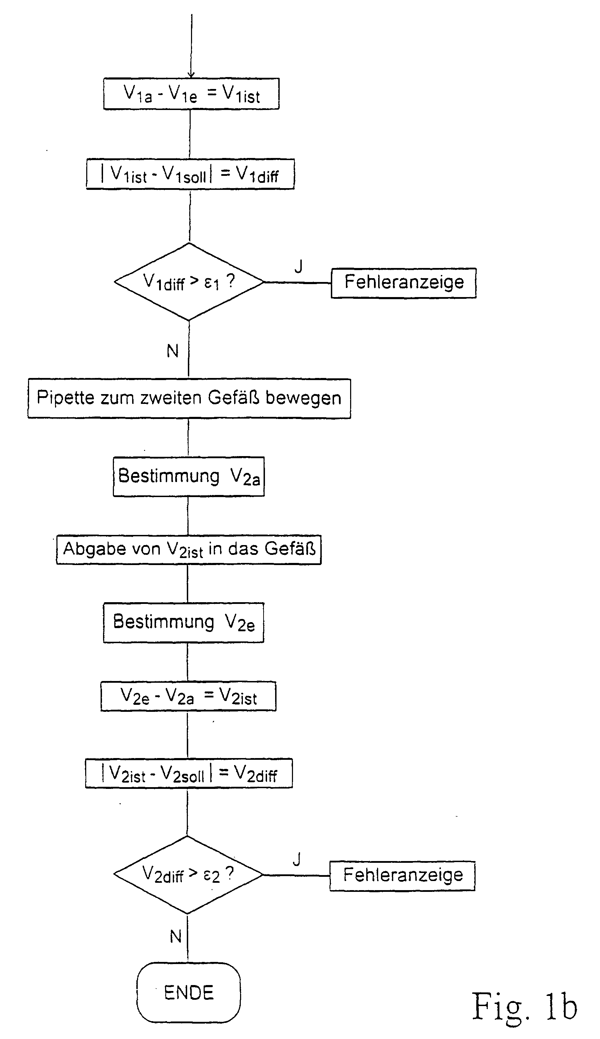

Anhand des in den Figuren 1a und 1b gezeigten Flußdiagramms wird eine spezielle Ausführungsform der vorliegenden Erfindung nun näher erläutert. Nach dem Start des Verfahrens wird der Füllstand $V_{1a}$ eines ersten Gefäßes ermittelt. Der Füllstand kann entweder durch einen Benutzer in eine Recheneinheit eingegeben werden, oder, falls dies nicht geschehen ist, durch eine Messung mit Hilfe einer Flüssigkeitsdetektion ermittelt werden. Wird nun ein Befehl zur Übertragung eines Flüssigkeitsvolumens durch Pipettierung in die Recheneinheit eingegeben, so wird die Detektionsspitze in das erste Gefäß bewegt, die Flüssigkeitsoberfläche detektiert und so das Flüssigkeitsvolumen $V_{11a}$ ermittelt. Ist $V_{11a} = 0$, befindet sich also keine Flüssigket in dem Gefäß, so wird eine Fehlermeldung ausgegeben. Danach wird durch die Rechnereinheit die Differenz zwischen $V_{1a}$ und $V_{11a}$ gemäß der Gleichung $|V_{1a} - V_{11a}| = V_{11diff}$ berechnet. Anschließend wird durch die Rechnereinheit ein Vergleich der Differenz $V_{11diff}$ mit einem vorbestimmten Flüssigkeitsvolumen $\varepsilon_{11}$ vorgenommen und für den Fall daß $V_{11diff} > \varepsilon_{11}$ ist, eine Fehlermeldung angezeigt. Bewegt sich $V_{11diff}$ innerhalb des durch $\varepsilon_{11}$ vorbestimmten Intervalls, ist also $V_{11diff} < \varepsilon_{11}$, so wird ein Flüssigkeitsvolumen $V_{1ist}$ in die Pipette aufgenommen. Bei der Flüssigkeitsaufnahme wird bevorzugt die Pipette noch einen geringen zusätzlichen Weg nach unten in die Flüssigkeit abgesenkt, um das Ansaugen von Luft zu vermeiden. Dann wird das Flüssigkeitsvolumen $V_{1ist}$ in die Pipette aufgenommen, wobei während der Aufnahme der Flüssigkeit die Pipette permanent nach unten in die Flüssigkeit bewegt wird, wodurch das Ansaugen von Luft bei fallendem Flüssigkeitsstand vermieden wird. Anschließend wird das in dem Gefäß enthaltene Flüssigkeitsvolumen $V_{1e}$ bestimmt und in einer Rechnereinheit gespeichert.

Danach wird durch die Rechnereinheit die Berechnung des tatsächlich aufgenommenen Flüssigkeitsvolumens $V_{1ist}$ gemäß der Gleichung $V_{1a} - V_{1e} = V_{1ist}$ vorgenommen (siehe Fig. 1b). Anschließend wird durch die Rechnereinheit die Differenz zwischen tatsächlich aufgenommenem Flüssigkeitsvolumen $V_{1ist}$ und einem zur Aufnahme vorbestimmten Flüssigkeitsvolumen $V_{1soll}$ gemäß der Gleichung $|V_{1ist} - V_{1soll}| = V_{1diff}$ vorgenommen. Dann wird wiederum durch die Rechnereinheit ein Vergleich der Differenz $V_{1diff}$ mit einem vorbestimmten Flüssigkeitsvolumen $\varepsilon_1$ vorgenommen und eine Fehlermeldung für den Fall angezeigt, daß $V_{1diff} > \varepsilon_1$ ist. Bewegt sich $V_{1diff}$ innerhalb des durch $\varepsilon_1$ vorbestimmten Intervalls, ist also $V_{1diff} < \varepsilon_1$, so wird die Pipette von dem ersten Gefäß zu dem zweiten Gefäß bewegt. Als nächster Schritt wird das in dem zweiten Gefäß enthaltene Flüssigkeitsvolumen $V_{2a}$ bestimmt und der Wert in einer Rechnereinheit gespeichert. Dann wird ein in der Pipette enthaltenes Flüssigkeitsvolumen $V_{2ist}$ aus der Pipette in das zweite Gefäß abgegeben und anschließend wiederum das in dem zweiten Gefäß enthaltene Flüssigkeitsvolumen $V_{2e}$ bestimmt und in einer Rechnereinheit gespeichert. Danach wird durch die Rechnereinheit die Berechnung des tatsächlich abgegebenen Flüssigkeitsvolumens $V_{2ist}$ gemäß der Gleichung $V_{2e} - V_{2a} = V_{2ist}$ vorgenommen. Anschließend wird durch die Rechnereinheit die Differenz zwischen tatsächlich abgegebenem Flüssigkeitsvolumen $V_{2ist}$ und einem zur Abgabe vorbestimmten Flüssigkeitsvolumen $V_{2soll}$ gemäß der Gleichung $|V_{2ist} - V_{2soll}| = V_{2diff}$

ermittelt. Dann wird wiederum durch die Rechnereinheit ein Vergleich der Differenz $V_{2diff}$ mit einem vorbestimmten Flüssigkeitsvolumen $\varepsilon_2$ vorgenommen und eine Fehlermeldung für den Fall angezeigt, daß $V_{2diff} > \varepsilon_2$ ist. Bewegt sich $V_{2diff}$ innerhalb des durch $\varepsilon_2$ vorbestimmten Intervalls, ist also $V_{2diff} < \varepsilon_2$, so ist das Verfahren beendet.

**Patentansprüche**

1.  Verfahren zur Bestimmung eines Flüssigkeitsvolumens, welches einem Gefäß mittels einer Pipette entnommen wird, wobei das Verfahren die folgenden Schritte umfaßt:

    a) Bestimmung eines in dem Gefäß enthaltenen Flüssigkeitsvolumens $V_{1a}$ mittels einer Detektionsvorrichtung und Speicherung des Wertes in einer Rechnereinheit
    b) Aufnahme eines Flüssigkeitsvolumens $V_{ist}$ in eine Pipette
    c) Bestimmung des in dem Gefäß enthaltenen Flüssigkeitsvolumens $V_{1e}$ mittels einer Detektionsvorrichtung und Speicherung des Wertes in einer Rechnereinheit
    d) Berechnung des tatsächlich aufgenommenen Flüssigkeitsvolumens $V_{1ist}$ durch die Rechnereinheit gemäß der Gleichung

    $$V_{1a} - V_{1e} = V_{1ist}$$

    e) Berechnung der Differenz zwischen tatsächlich aufgenommenen Flüssigkeitsvolumen $V_{1ist}$ und einem zur Aufnahme vorbestimmten Flüssigkeitsvolumen $V_{1soll}$ durch die Rechnereinheit gemäß der Gleichung

    $$|V_{1ist} - V_{1soll}| = V_{1diff}$$

    f) Vergleich der Differenz $V_{1diff}$ mit einem vorbestimmten Flüssigkeitsvolumen $\varepsilon_1$ durch die Rechnereinheit und Anzeige einer Fehlermeldung für den Fall daß $V_{1diff} > \varepsilon_1$ ist.

2.  Verfahren zur Bestimmung eines Flüssigkeitsvolumens, welches aus einer Pipette in ein Gefäß abgegeben wird, wobei das Verfahren die folgenden Schritte umfaßt:

    a') Bestimmung eines in dem Gefäß enthaltenen Flüssigkeitsvolumnes $V_{2a}$ mittels einer Detektionsvorrichtung und Speicherung des Wertes in einer Rechnereinheit
    b') Abgabe eines Flüssigkeitsvolumens $V_{2ist}$ in das Gefäß

    c') Bestimmung des in dem Gefäß enthaltenen Flüssigkeitsvolumens $V_{2e}$ mittels einer Detektionsvorrichtung und Speicherung des Wertes in einer Rechnereinheit
    d') Berechnung des tatsächlich abgegebenen Flüssigkeitsvolumens $V_{2ist}$ durch die Rechnereinheit gemäß der Gleichung

    $$V_{2e} - V_{2a} = V_{2ist}$$

    e') Berechnung der Differenz zwischen tatsächlich abgegebenem Flüssigkeitsvolumen $V_{2ist}$ und einem zur Abgabe vorbestimmten Flüssigkeitsvolumen $V_{2soll}$ durch die Rechnereinheit gemäß der Gleichung

    $$|V_{2ist} - V_{2soll}| = V_{2diff}$$

    f') Vergleich der Differenz $V_{2diff}$ mit einem vorbestimmten Flüssigkeitsvolumen $\varepsilon_2$ durch die Rechnereinheit und Anzeige einer Fehlermeldung für den Fall daß $V_{2diff} > \varepsilon_2$ ist.

3.  Verfahren zur Bestimmung eines Flüssigkeitsvolumens, welches aus einem ersten Gefäß in ein zweites Gefäß mittels einer Pipette übertragen wird, wobei zuerst die Schritte a) bis f) zur Bestimmung des aus dem ersten Gefäß in die Pipette aufgenommenen Flüssigkeitsvolumens gemäß Anspruch 1 durchgeführt werden, dann die Pipette von dem ersten Gefäß zu dem zweiten Gefäß bewegt wird und anschließend die Schritte a') bis f') zur Bestimmung des aus der Pipette in das zweite Gefäß abgegebenen Flüssigkeitsvolumens gemäß Anspruch 2 durchgeführt werden.

4.  Verfahren nach einem der Ansprüche 1 bis 3, wobei als Schritt a) bzw. Schritt a') der Wert des in dem Gefäß enthaltenen Flüssigkeitsvolumens $V_{1a}$ bzw. $V_{2a}$ durch den Benutzer vorgegeben ist.

5.  Verfahren nach Anspruch 1, 3 oder 4, wobei nach Schritt

    a) zusätzlich die folgenden Schritte durchgeführt werden:

    a1) Bestimmung des in dem ersten Gefäß enthaltenen Flüssigkeitsvolumnes $V_{11a}$ mittels einer Detektionsvorrichtung und Speicherung des Wertes in einer Rechnereinheit
    a2) Ausgabe einer Fehlermeldung für den Fall, daß $V_{11a} = 0$ ist.
    a3) Berechnung der Differenz zwischen $V_{1a}$ und $V_{11a}$ durch die Rechnereinheit ge-

mäß der Gleichung

$$|V_{1a} - V_{11a}| = V_{11diff}$$

a4) Vergleich der Differenz $V_{11diff}$ mit einem vorbestimmten Flüssigkeitsvolumen $\varepsilon_{11}$ durch die Rechnereinheit und Anzeige einer Fehlermeldung für den Fall daß $V_{11diff} > \varepsilon_{11}$ ist.

6. Verfahren nach einem der Ansprüche 1 bis 5, wobei das aus dem ersten Gefäß in die Pipette aufgenommene bzw. aus der Pipette in das zweite Gefäß abgegebene Flüssigkeitsvolumen $V_{1soll}$ bzw. $V_{2soll}$ der Bedingung

$$1 \ \mu l < (V_{1soll}; V_{2soll}) < 10000 \ \mu l$$

bevorzugt

$$10 \ \mu l < (V_{1soll}; V_{2soll}) < 1000 \ \mu l$$

besonders bevorzugt

$$100 \ \mu l < (V_{1soll}; V_{2soll}) < 400 \ \mu l$$

genügt.

7. Verfahren nach einem der vorhergehenden Ansprüche, wobei vor Bestimmung von zumindest einem Flüssigkeitsvolumen eine als Detektionsvorrichtung verwendete Detektionsspitze zumindest einmal in die Flüssigkeit eingetaucht wird ünd anschließend in eine Position oberhalb der Flüssigkeitsoberfläche zurückbewegt wird.

8. Vorrichtung zur Bestimmung eines Flüssigkeitsvolumens, welches einem Gefäß mittels einer Pipette entnommen wird, wobei die Vorrichtung die folgenden Mittel umfaßt:

   a) Speichermittel zur Speicherung von Zahlenwerten
   b) Mittel zur Bestimmung eines in dem Gefäß enthaltenen Flüssigkeitsvolumnes $V_{1a}$
   c) Mittel zur Aufnahme eines Flüssigkeitsvolumens $V_{1ist}$ in eine Pipette
   d) Mittel zur Bestimmung des in dem Gefäß enthaltenen Flüssigkeitsvolumens $V_{1e}$
   e) Mittel zur Berechnung des tatsächlich aufgenommenen Flüssigkeitsvolumens $V_{1ist}$ gemäß der Gleichung

$$V_{1a} - V_{1e} = V_{1ist}$$

   f) Mittel zur Berechnung der Differenz zwischen tatsächlich aufgenommenen Flüssigkeitsvolumen $V_{1ist}$ und einem zur Aufnahme vorbestimmten Flüssigkeitsvolumen $V_{1soll}$ gemäß der Gleichung

$$|V_{1ist} - V_{1soll}| = V_{1diff}$$

   g) Mittel zum Vergleich der Differenz $V_{1diff}$ mit einem vorbestimmten Flüssigkeitsvolumen $\varepsilon_1$.
   h) Mittel zur Anzeige einer Fehlermeldung.

9. Vorrichtung zur Bestimmung eines Flüssigkeitsvolumens, welches aus einer Pipette in ein Gefäß abgegeben wird, wobei die Vorrichtung die folgenden Mittel umfaßt:

   a') Speichermittel zur Speicherung von Zahlenwerten
   b') Mittel zur Bestimmung eines in dem Gefäß enthaltenen Flüssigkeitsvolumnes $V_{2a}$
   c') Mittel zur Abgabe eines Flüssigkeitsvolumens $V_{2ist}$ in das Gefäß
   d') Mittel zur Bestimmung des in dem Gefäß enthaltenen Flüssigkeitsvolumens $V_{2e}$
   e') Mittel zur Berechnung des tatsächlich abgegebenen Flüssigkeitsvolumens $V_{2ist}$ gemäß der Gleichung

$$V_{2e} - V_{2a} = V_{2ist}$$

   f') Mittel zur Berechnung der Differenz zwischen tatsächlich abgegebenem Flüssigkeitsvolumen $V_{2ist}$ und einem zur Abgabe vorbestimmten Flüssigkeitsvolumen $V_{soll}$ gemäß der Gleichung

$$|V_{2ist} - V_{2soll}| = V_{2diff}$$

   g') Mittel zum Vergleich der Differenz $V_{2diff}$ mit einem vorbestimmten Flüssigkeitsvolumen $\varepsilon_2$.
   h') Mittel zur Anzeige einer Fehlermeldung.

10. Vorrichtung zur Bestimmung eines Flüssigkeitsvolumens, welches aus einem ersten Gefäß in ein zweites Gefäß mittels einer Pipette übertragen wird, wobei die Vorrichtung die Mittel a) bis h) gemäß Anspruch 8 der Vorrichtung zur Bestimmung des aus dem ersten Gefäß in die Pipette aufgenommenen Flüssigkeitsvolumens enthält, ein Mittel zur Bewegung der Pipette von dem ersten Gefäß zu dem zweiten Gefäß enthalten ist und die Mittel a') bis h') gemäß Anspruch 9 der Vorrichtung zur Bestimmung des aus der Pipette in das zweite Gefäß abgegebenen Flüssigkeitsvolumens enthalten sind.

## Claims

1. A method for determining a volume of liquid which is withdrawn from a receptacle by means of a pipette, wherein the method comprises the following steps:

   a) determination of a volume of liquid $V_{1a}$ contained in the receptacle by means of a detection device, and saving of this value in a computing unit

   b) withdrawal of a volume of liquid $V_{ist}$ into a pipette

   c) determination of the volume of liquid $V_{1e}$ contained in the receptacle by means of a detection device, and saving of this value in a computing unit

   d) calculation by the computing unit of the volume of liquid $V_{1ist}$ actually withdrawn in accordance with the equation

   $$V_{1a} - V_{1e} = V_{1ist}$$

   e) calculation by the computing unit of the difference between the volume of liquid $V_{1ist}$ actually withdrawn and a volume of liquid $V_{1soll}$ predetermined for withdrawal in accordance with the equation

   $$|V_{1ist} - V_{1soll}| = V_{1diff}$$

   f) comparison by the computing unit between the difference $V_{1diff}$ and a predetermined volume of liquid $\varepsilon_1$ and indication of an error message in the case that $V_{1diff} > \varepsilon_1$.

2. A method for determining a volume of liquid which is released from a pipette into a receptacle, wherein the method comprises the following steps:

   a') determination of a volume of liquid $V_{2a}$ contained in the receptacle by means of a detection device, and saving of this value in a computing unit

   b') release of a volume of liquid $V_{2ist}$ into the receptacle

   c') determination of the volume of liquid $V_{2e}$ contained in the receptacle by means of a detection device, and saving of this value in a computing unit

   d') calculation by the computing unit of the volume of liquid $V_{2ist}$ actually released in accordance with the equation

   $$V_{2e} - V_{2a} = V_{2ist}$$

   e') calculation by the computing unit of the difference between the volume of liquid $V_{2ist}$ actually released and a volume of liquid $V_{2soll}$ predetermined for release in accordance with the equation

   $$|V_{2ist} - V_{2soll}| = V_{2diff}$$

   f') comparison by the computing unit of the difference $V_{2diff}$ with a predetermined volume of liquid $\varepsilon_2$ and indication of an error message in the case that $V_{2diff} > \varepsilon_2$.

3. A method for determining the volume of liquid which is transferred from a first receptacle into a second receptacle by means of a pipette, wherein at first the steps a) to f) are undertaken in order to determine the volume of liquid withdrawn from the first receptacle by the pipette according to claim 1, then the pipette is moved from the first receptacle to the second receptacle, and subsequently the steps a') to f') are undertaken in order to determine the volume of liquid released from the pipette into the second receptacle according to claim 2.

4. The method according to any one of claims 1 to 3, wherein for step a) or step a') respectively, the value of the volume of liquid $V_{1a}$ or $V_{2a}$ respectively, contained in the receptacle are given by the user.

5. The method according to claim 1, 3 or 4, wherein in addition after step a) the following steps are undertaken:

   a1) determination of the volume of liquid $V_{11a}$ contained in the first receptacle by means of a detection device and saving of this value in a computing unit

   a2) issuance of an error message in the case that $V_{11a} = 0$

   a3) calculation by the computing unit of the difference between $V_{1a}$ and $V_{11a}$ in accordance with the equation

$$|V_{1a} - V_{11a}| = V_{11diff}$$

a4) comparison by the computing unit of the difference $V_{11diff}$ with a predetermined volume of liquid $\varepsilon_{11}$, and indication of an error message in the case that $V_{11diff} > \varepsilon_{11}$.

6. The method according to any one of claims 1 to 5, wherein the volume of liquid withdrawn from the first receptacle into the pipette or the volume of liquid released into the second receptacle from the pipette, $V_{1soll}$ or $V_{2soll}$ respectively, complies with the condition

$$1 \ \mu l < (V_{1soll}; V_{2soll}) < 10000 \ \mu l$$

preferably

$$10 \ \mu l < (V_{1soll}; V_{2soll}) < 1000 \ \mu l$$

especially preferred

$$100 \ \mu l < (V_{1soll}; V_{2soll}) < 400 \ \mu l.$$

7. The method according to any one of the preceding claims, wherein before at least one volume of liquid is determined, a detection tip used as a detection device is dipped at least once into the liquid, and is subsequently moved back into a position above the surface of the liquid.

8. Device for the determination of a volume of liquid which is withdrawn from a receptacle by means of a pipette, wherein the device comprises the following means:

   a) saving means to save numerical values

   b) means to determine a volume of liquid $V_{1a}$ contained in the receptacle

   c) means to withdraw a volume of liquid $V_{1ist}$ into a pipette

   d) means to determine the volume of liquid $V_{1e}$ contained in the receptacle

   e) means to calculate the volume of liquid $V_{1ist}$ actually withdrawn in accordance with the equation

$$V_{1a} - V_{1e} = V_{1ist}$$

   f) means to calculate the difference between the volume of liquid $V_{1ist}$ actually withdrawn and a volume of liquid $V_{1soll}$ predetermined for withdrawal in accordance with the equation

$$|V_{1ist} - V_{1soll}| = V_{1diff}$$

   g) means to compare the difference $V_{1diff}$ with a predetermined volume of liquid $\varepsilon_1$

   h) means to indicate an error message.

9. Device for the determination of a volume of liquid which is released from a pipette into a receptacle, wherein the device comprises the following means:

   a') saving means to save numerical values

   b') means to determine a volume of liquid $V_{2a}$ contained in the receptacle

   c') means to release a volume of liquid $V_{2ist}$ into the receptacle

   d') means to determine the volume of liquid $V_{2e}$ contained in the receptacle

   e') means to calculate the volume of liquid $V_{2ist}$ actually released in accordance with the equation

$$V_{2e} - V_{2a} = V_{2ist}$$

   f') means to calculate the difference between the volume of liquid $V_{2ist}$ actually released and a volume of liquid $V_{2soll}$ predetermined for release in accordance with the equation

$$|V_{2ist} - V_{2soll}| = V_{2diff}$$

   g') means to compare the difference $V_{2diff}$ with a predetermined volume of liquid $\varepsilon_2$

   h') means to indicate an error message.

10. Device for the determination of a volume of liquid which is transferred from a first receptacle into a second receptacle by means of a pipette, wherein the device comprises the means a) to h) of the device for the determination of the volume of liquid withdrawn from the first receptacle into the pipette according to claim 8, a means to move the pipette from the first receptacle to the second receptacle is comprised, and the means a') to h') of the device to determine the volume of liquid released from the pipette into the second receptacle according to claim 9 are comprised.

## Revendications

1. Procédé permettant de déterminer un volume de liquide extrait d'un récipient à l'aide d'une pipette, le procédé se composant des étapes suivantes :

   a) détermination d'un volume de liquide $V_{1a}$ contenu dans le récipient, à l'aide d'un dispositif de détection et d'une mise en mémoire de la valeur dans un ordinateur
   b) prélèvement d'un volume de liquide $V_{eff}$ dans une pipette
   c) détermination du volume de liquide $V_{1e}$ contenu dans le récipient, à l'aide d'un dispositif de détection et d'une mise en mémoire de la valeur dans un ordinateur
   d) calcul par l'ordinateur du volume de liquide $V_{1eff}$ réellement prélevé d'après l'équation

   $$V_{1a} - V_{1e} = V_{1eff}$$

   e) calcul par l'ordinateur de la différence entre le volume de liquide $V_{1eff}$ réellement prélevé et un volume de liquide $V_{1th}$ prédéfini pour le prélèvement, d'après l'équation

   $$| V_{1eff} - V_{1th} | = V_{1diff}$$

   f) comparaison par l'ordinateur de la différence $V_{1diff}$ avec un volume de liquide prédéfini $\varepsilon_1$ et affichage d'un message d'erreur lorsque $V_{1diff}$ est > à $\varepsilon_1$.

2. Procédé permettant de déterminer un volume de liquide versé dans un récipient à partir d'une pipette, le procédé se composant des étapes suivantes :

   a') détermination d'un volume de liquide $V_{2a}$ contenu dans le récipient, à l'aide d'un dispositif de détection et d'une mise en mémoire de la valeur dans un ordinateur
   b') dépôt d'un volume de liquide $V_{2eff}$ dans le récipient
   c') détermination du volume de liquide $V_{2e}$ contenu dans le récipient, à l'aide d'un dispositif de détection et d'une mise en mémoire de la valeur dans un ordinateur
   d') Calcul par l'ordinateur du volume de liquide $V_{2eff}$ réellement versé d'après l'équation

   $$V_{2e} - V_{2a} = V_{2eff}$$

   e') calcul par l'ordinateur de la différence entre le volume de liquide $V_{2eff}$ réellement versé et un volume de liquide $V_{2th}$ prédéfini pour ce dépôt d'après l'équation

   $$| V_{2eff} - V_{2th} | = V_{2diff}$$

   f') comparaison par l'ordinateur de la différence $V_{2diff}$ avec un volume de liquide $\varepsilon_2$ prédéfini et affichage d'un message d'erreur lorsque $V_{2diff}$ est > à $\varepsilon_2$.

3. Procédé permettant de déterminer un volume de liquide transvasé d'un premier récipient dans un deuxième récipient à l'aide d'une pipette, les étapes a) à f) étant tout d'abord effectuées pour déterminer, conformément à la revendication 1, le volume de liquide prélevé dans la pipette à partir du premier récipient, la pipette étant ensuite déplacée du premier récipient vers le deuxième récipient, et les étapes a') à f') étant alors effectuées pour déterminer, conformément à la revendication 2, le volume de liquide versé dans le deuxième récipient à partir de la pipette.

4. Procédé selon l'une des revendications 1 à 3, la première étape a) ou a') consistant pour l'utilisateur à définir la valeur du volume de liquide $V_{1a}$ ou $V_{2a}$ contenu dans le récipient.

5. Procédé selon la revendication 1, 3 ou 4, pour lequel, après l'étape a), sont en outre effectuées les étapes suivantes :

   a1) détermination du volume de liquide $V_{11a}$ contenu dans le premier récipient à l'aide d'un dispositif de détection et d'une mise en mémoire de la valeur dans un ordinateur
   a2) émission d'un message d'erreur lorsque $V_{11a} = 0$.
   a3) calcul par l'ordinateur de la différence entre $V_{1a}$ et $V_{11a}$ d'après l'équation

   $$|V_{1a} - V_{11a}| = V_{11diff}$$

   a4) comparaison par l'ordinateur de la différence $V_{11diff}$ avec un volume de liquide $\varepsilon_{11}$ prédéfini et affichage d'un message d'erreur lorsque $V_{11diff}$ est > à $\varepsilon_{11}$.

6. Procédé selon l'une des revendications 1 à 5, le volume de liquide $V_{1th}$ ou $V_{2th}$ prélevé dans la pipette à partir du premier récipient ou versé de la pipette dans le deuxième récipient, remplissant la condition :

$$1 \ \mu l < (V_{1th} \ ; V_{2th}) < 10000 \ \mu l$$

ou, mieux, la condition :

$$10 \ \mu l < (V_{1th} \ ; V_{2th}) < 1000 \ \mu l$$

ou, mieux encore, la condition :

$$100 \ \mu l < (V_{1th} \ ; V_{2th}) < 400 \ \mu l.$$

7. Procédé selon l'une des revendications précédentes, au cours duquel, avant la détermination d'au moins un volume de liquide, une pointe de détection, utilisée comme dispositif de détection, est plongée au moins une fois dans le liquide, puis est replacée dans une position se situant au-dessus de la surface du liquide.

8. Dispositif servant à déterminer un volume de liquide qui est prélevé depuis un récipient à l'aide d'une pipette, ledit dispositif étant doté des moyens suivants :

   a) moyen de mémorisation afin de mémoriser les valeurs numériques
   b) moyen de détermination d'un volume de liquide $V_{1a}$ contenu dans le récipient
   c) moyen de prélèvement d'un volume de liquide $V_{1eff}$ dans une pipette
   d) moyen de détermination du volume de liquide $V_{1e}$ contenu dans le récipient
   e) moyen de calcul du volume de liquide $V_{1eff}$ réellement prélevé à l'aide de l'équation

$$V_{1a} - V_{1e} = V_{1eff}$$

   f) moyen de calcul de la différence entre le volume de liquide $V_{1eff}$ réellement prélevé et un volume de liquide $V_{1th}$ prédéfini pour le prélèvement, à l'aide de l'équation

$$| \ V_{1eff} - V_{1th} \ | = V_{1diff}$$

   g) moyen de comparaison de la différence $V_{1diff}$ avec un volume de liquide $\varepsilon_1$ prédéfini
   h) moyen d'affichage d'un message d'erreur.

9. Dispositif servant à déterminer un volume de liquide versé dans un récipient à partir d'une pipette, ce dispositif étant doté des moyens suivants :

   a') moyen de mémorisation afin de mémoriser les valeurs numériques

   b') moyen de détermination d'un volume de liquide $V_{2a}$ contenu dans le récipient
   c') moyen de dépôt d'un volume de liquide $V_{2eff}$ dans le récipient
   d') moyen de détermination du volume de liquide $V_{2e}$ contenu dans le récipient
   e') moyen de calcul du volume de liquide $V_{2eff}$ réellement déposé à l'aide de l'équation

$$V_{2e} - V_{2a} = V_{2eff}$$

   f') moyen de calcul de la différence entre le volume de liquide $V_{2eff}$ réellement versé et un volume de liquide $V_{2th}$ prédéfini pour le dépôt, à l'aide de l'équation

$$| \ V_{2eff} - V_{2th} \ | = V_{2diff}$$

   g') moyen de comparaison de la différence $V_{2diff}$ avec un volume de liquide $\varepsilon_2$ prédéfini
   h') Moyen d'affichage d'un message d'erreur.

10. Dispositif servant à déterminer un volume de liquide transvasé d'un premier récipient dans un deuxième récipient à l'aide d'une pipette, ce dispositif étant doté des moyens a) à h), conformes à la revendication 8, du dispositif de détermination du volume de liquide prélevé dans la pipette à partir du premier récipient, d'un moyen de déplacement de la pipette du premier récipient vers le deuxième récipient, et des moyens a') à h'), conformes à la revendication 9, du dispositif de détermination du volume de liquide déposé dans le deuxième récipient à partir de la pipette.

START

$V_{1a}$ ? — N → Bestimmung $V_{1a}$

J

Pipette in das Gefäß bewegen

Bestimmung $V_{11a}$

$V_{11a} = 0$ ? — J → Fehleranzeige

N

$|V_{1a} - V_{11a}| = V_{11diff}$

$V_{11diff} > \varepsilon_{11}$ ? — J → Fehleranzeige

N

Aufnahme von $V_{1ist}$ in die Pipette

Bestimmung $V_{1e}$

Fig. 1a

Fig. 1b